# EUROPÄISCHE PATENTSCHRIFT

(11) **EP 0 770 852 B1**
(45) Veröffentlichungstag und Bekanntmachung des Hinweises auf die Patenterteilung: **07.01.1999**
(21) Anmeldenummer: 96250241.5
(22) Anmeldetag: 24.10.1996
(51) Int. Cl.: G01D 15/24

(54) **Anordnung zum Positionieren eines Schreibstiftes in einer Registriereinrichtung**
Arrangement for positioning of a pen in a recording apparatus
Agencement pour positionner un élément d'écriture dans un appareil d'enregistrement

(30) Priorität: 27.10.1995 DE 19541132
(43) Veröffentlichungstag der Anmeldung: 02.05.1997
(73) Patentinhaber: Hartmann & Braun GmbH & Co. KG, 65760 Eschborn (DE)
(72) Erfinder: Bruhn, Arno, 30655 Hannover (DE); Kirste, Hans-Herbert, 31628 Landesbergen (DE)
(74) Vertreter: Presting, Hans-Joachim, Dipl.-Ing.

(56) Entgegenhaltungen:
- EP-A- 0 078 367
- DE-A- 3 607 249
- US-A- 4 318 110
- US-A- 4 368 411

## Beschreibung

Die Erfindung betrifft eine Anordnung zum Positionieren eines Schreibstiftes in einer Registriereinrichtung zum Aufzeichnen des Zeitverlaufes eines anschaltbaren Meßsignals nach dem Oberbegriff des Patentanspruchs 1.

Aus der EP 0 078 367 ist ein Aufzeichnungs-/Anzeigeapparat für industrielle Verfahren mit einer bewegbaren Vorrichtung, die mit ihrer Stellung die Größe einer zu überwachenden Verfahrens- oder Prozeßbedingung anzeigt und durch einen Schrittmotor antreibbar ist, der durch sequentielle Impulse von einer Taktimpulseinrichtung betätigbar ist, bekannt, der mit einer Rückkopplungseinrichtung zum Entwickeln eines Rückkopplungssignals entsprechend der Stellung der bewegbaren Vorrichtung innerhalb eines Gesamtmeßbereiches von Stellungen dieser Vorrichtung mit einer Abweichungseinrichtung zum Erzeugen eines Abweichungssignals, das die Differenz zwischen dem Rückkopplungssignal und einem Meßsignal angibt. Dabei ist eine auf das Abweichungssignal ansprechende Totbandeinrichtung zum Entwickeln eines Steuer- oder Regelsignals vorgesehen, die anspricht, wenn das Abweichungssignal außerhalb eines vorbestimmten Totbandes um die durch das Meßsignal repräsentierte Stellung herum liegt. Weiterhin ist eine auf die anfängliche Entwicklung des Steuer- oder Regelsignals ansprechende Schaltungseinrichtung zum Aktivieren des Schrittmotors zwecks Erzeugung einer begrenzten Korrekturwirkung eines vorgegebenen Ausmaßes zum Zurückführen der Vorrichtung in die durch das Meßsignal repräsentierte Stellung und einer auf das Steuer- und Regelsignal ansprechende zweite Schaltungseinrichtung zum Aktivieren des Schrittmotors über das vorgegebene Ausmaß hinaus vorgesehen, die dann anspricht, wenn das Abweichungssignal am Ende einer vorbestimmten Zeitspanne nach der Aktivierung des Schrittmotors durch die erste Einrichtung immer noch außerhalb des Totbandes liegt.

Dieser bekannte Apparat ist mit dem Nachteil behaftet, daß die durch die Totbandeinrichtung vorbestimmte Bandbreite des Meßsignals sich als Aufzeichnungsfehler zwischen dem tatsächlichen Meßsignal und dem aufgezeichneten Signal bemerkbar macht. Änderungen des Meßsignals innerhalb der Bandbreite der Totbandeinrichtung werden nicht aufgezeichnet. Insoweit ist die Bandbreite der Totbandeinrichtung ein Maß für die Aufzeichnungsgenauigkeit beziehungsweise der Güteklasse der Aufzeichnungseinrichtung.

Überdies ist aus der Erfahrung bekannt, daß eine Verringerung der Bandbreite der Totbandeinrichtung zum Zwecke der Erhöhung der Aufzeichnungsgenauigkeit zu Instabilitäten des Positionierregelkreises führt, die sich in Überschwingen des Aufzeichnungssignals gegenüber dem Meßsignal zeigen.

Insbesondere bei der Aufzeichnung von Meßsignalen, die in Meßsignalquellen generiert werden, die sich physisch in einem explosionsgefährdeten Bereich befinden, sind galvanische Trennungen zwischen Meßsignalquellen innerhalb des explosionsgefährdeten Bereichs und Registriereinrichtungen und sonstige Signalverarbeitungsmittel außerhalb der explosionsgefährdeten Bereiche zwingend vorgeschrieben.

In der DE 36 07 249 ein Stiftschreiber beschrieben, der grundsätzlich zum Aufzeichnen von Meßsignalen aus explosionsgefährdeten Bereichen geeignet ist. Der Stiftschreiber ist ausgestattet mit mindestens einer ersten Einheit, bestehend aus einem beweglichen Schreibstiftwagen, der abhängig von der Größe eines Meßsignals in einer Richtung senkrecht zur Bewegungsrichtung eines Kurvenblattes verfahrbar ist, eine Servoreinheit die ein Potentiometer zum Erzeugen eines der Lage des Schreibstiftwagens zugeordneten Lagerückkopplungssignals aufweist sowie einstückig mit einem Servoverstärker ausgeführt ist, der die Differenz zwischen dem Lagerückkopplungssignal des Potentiometers und dem Meßsignal erzeugt und einen Servomotor in vorbestimmter Richtung so ansteuert, daß die Differenz zu Null wird, wobei der Schreibstiftwagen entsprechend verfahrbar ist und eine Leitachse die zwischen beiden Seiten eines Endes einer gedruckten Schaltungsplatte angeordnet ist und auf der der Schreibstift-Wagen abnehmbar montiert ist, wobei der Schreibstift-Wagen mit einem Schreibstift versehen ist, der analog die Größe des Meßsignals auf dem Kurvenblatt aufzuzeichnen vermag, wobei ein Meßsignal mit einem Analog/Digital-Wandler, im folgenden als A/D-Wandler bezeichnet, in ein Digitalsignal umgewandelt wird, das dann unter der Steuerung eines Mikroprozessors über einen Digital/Analog-Wandler, im folgenden als D/A-Wandler bezeichnet, der Servoeinheit eingespeist wird. Dabei sind zwischen den A/D-Wandlem und dem Mikroprozessor Optokoppler vorgesehen, über die das das Meßsignal repräsentierende Digitalsignal übertragen wird. Das digitale Ausgangssignal des Mikroprozessors wird über einen D/A-Wandler in ein Analogsignal rückgewandelt, wobei mit der Amplitude des rückgewandelten Analogsignals ein Servomotor gesteuert wird.

Die Positionierung der Schreibsysteme in einem derartigen Stiftschreiber ist zwar sehr genau dem Meßsignal folgend darstellbar, aber nachteiligerweise sehr aufwendig, da jedem einzelnen Meßkanal jeweils ein A/D-Wandler und ein D/A-Wandler zuzuordnen sind, wobei die Reproduktionsgenauigkeit des Meßsignals auf seine Abbildung als aufgezeichnetes Signal durch die Datenbitbreite des digitalen Ausganges des A/D-Wandlers und.des digitalen Einganges des D/A-Wandlers limitiert ist. Dadurch steigt mit zunehmender geforderter Aufzeichnungsgenauigkeit für n Aufzeichnungskanäle der erforderliche Aufwand an 2n Wandlerbaugruppen zur Umsetzung analog-digital-analog. Darüber hinaus sind zur Übertragung eines k bit breiten Datenwortes, das am Ausgang eines A/D-Wandlers abgreifbar ist entweder k Optokoppler oder jeweils ein Parallel-Serien-Wandler zwischen jedem A/D-Wandler und einem diesen zugeordneten Optokoppler erforderlich.

Aus der US 4,318,110 ist ein mehrkanaliges Aufzeichnungsgerät bekannt, bei dem die Mittel des Schreibsystems bestehend aus einem Elektromotor, Mittel zur Bewegung des Schreibstiftes entsprechend des Aufzeichnungssignals und Mittel zur Ansteuerung des Elektromotors über einen Optokoppler galvanisch von den Mitteln zur Bestimmung der aktuellen Schreibstiftposition und den Mitteln zum Vergleich der aktuellen Schreibstiftposition mit dem angeschalteten Meßsignal und zur Bestimmung der Regelabweichung als Differenz aus dem Meßsignal und dem Schreibstiftpositionssignal getrennt. Dabei sind die Elektromotoren geerdet und die einzelnen Mittel zur Bestimmung der Regelabweichung potentialfrei. Ein der Regelabweichung proportionaler Strom wird der Sendediode des Optokopplers zugeführt. Dem in der Beschreibung aufgezeigten Problem der nichtlinearen Beziehung zwischen dem Strom durch die Sendediode und der Ausgangsspannung des Empfangstransistors des Optokopplers wird unter dem Erfordernis einer ausreichend hohen Kreisverstärkung des Positionierregelkreises und konstanter Verstärkung des Vorverstärkers begegnet. Die Kreisverstärkung des Positionierregelkreises ist jedoch durch die Stabilitätskriterien des Positionierregelkreises begrenzt, wodurch der Schreibstift nachteiligerweise entweder schnell und ungenau oder langsam und genau positionierbar ist. Darüber hinaus macht die ausschließlich unipolare Gleichstromübertragung über den Optokoppler zur Gewährleistung beider Verfahrrichtungen des Schreibstiftes für jeden Aufzeichnungskanal jeweils eine auf den Bezugspegel des Meßsignals bezogene bipolare, galvanisch getrennte Stromversorgung erforderlich, die insbesondere bei mehrkanaligen Aufzeichnungsgeräten entsprechend aufwendig ist.

Darüber hinaus ist aus der US 4,368,411 ein Steuersystem für einen bürstenlosen Elektromotor mit einem motorstromgesteuerten Pulsweitenmodulator und einem Sensor zur Erfassung der relativen Position des permanentmagnetischen Rotors zur Statorwicklung bekannt, bei dem in Abhängigkeit von der Relativposition des Rotors zum Stator, der stromabhängigen Pulsweitensignale und eines Drehrichtungsbefehls einen Festwertspeicher zu adressieren, dessen Daten Zustandssignale zur Ansteuerung von Schaltelementen einer Schaltbrücke zur Motorsteuerung sind.

Der Erfindung liegt daher die Aufgabe zugrunde, Mittel zum Positionieren eines Schreibstiftes in einer Registriereinrichtung anzugeben, bei denen das Meßsignal von den Antriebsmitteln des Schreibstiftes galvanisch getrennt ist und die mit geringem Aufwand eine möglichst hohe Abbildungsgenauigkeit des Meßsignals auf das Aufzeichnungssignal ermöglichen.

Erfindungsgemäß wird diese Aufgabe mit den Mitteln des Patentanspruches 1 gelöst. Vorteilhafte Ausgestaltungen der Erfindung sind in den Ansprüchen 2 bis 8 beschrieben.

Die Erfindung wird nachstehend anhand eines Ausführungsbeispiels näher erläutert. Die dazu erforderlichen Zeichnungen zeigen:
- Figur 1: ein Prinzipschaltbild für einen Positionierregelkreis
- Figur 2: Zeitverlaufsdiagramme für ausgewählte Signalverläufe
- Figur 3: ein Prinzipschaltbild zur Positionsregelung in einer mehrkanaligen Registriereinrichtung

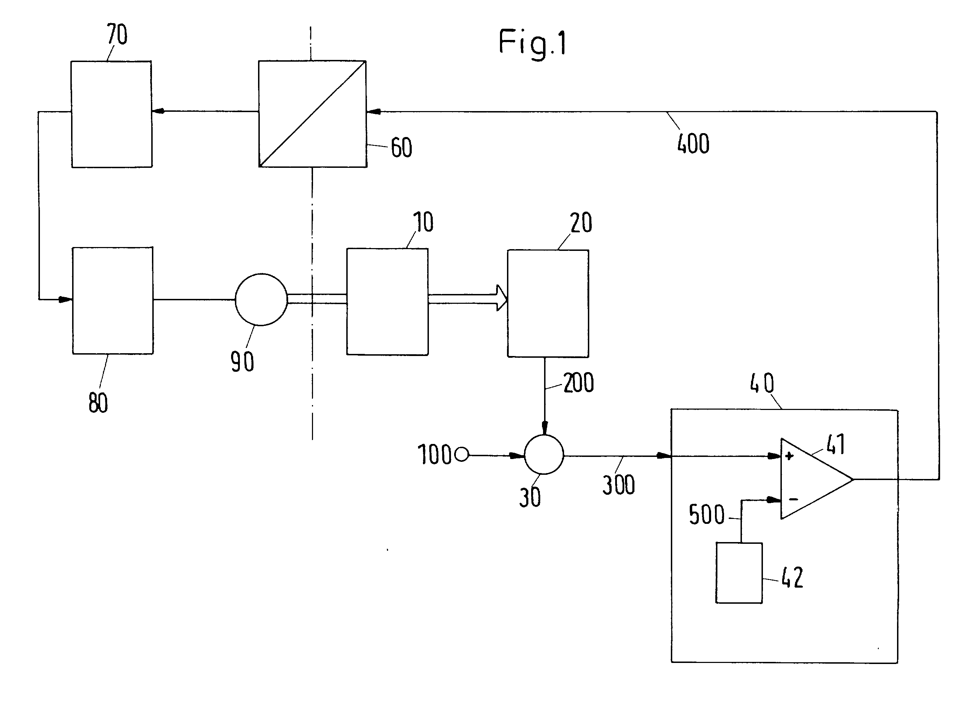

In Figur 1 ist ein Prinzipschaltbild für einen Positionierregelkreis zum Positionieren eines Schreibstiftes 10 in einer Registriereinrichtung zum Aufzeichnen des Zeitverlaufs mindestens eines anschaltbaren Meßsignals 100 gezeigt. Die Registriereinrichtung selbst weist für sich bekannte Mittel zum Transport eines Aufzeichnungsträgers, mindestens ein Schreibsystem bestehend aus einem elektrischen Antriebsmotor 90, einer Getriebevorrichtung zum Umsetzen der rotatorischen Antriebsbewegung des Antriebsmotors 90 in eine translatorische Bewegung des Schreibstiftes 10 quer zur Transportrichtung des Aufzeichnungsträgers und Mittel zur Aufnahme des Schreibstiftes 10, die der translatorischen Bewegung des Abtriebes der Getriebevorrichtung folgend angeordnet sind, auf. Darüber hinaus ist die Registriereinrichtung mit Mitteln 20 zur Bestimmung der aktuellen Schreibstiftposition mit Ausgabe eines der Schreibstiftposition adäquaten Schreibstiftpositionssignals 200 und Mitteln zur Steuerung des Antriebsmotors 90 entsprechend dem Meßsignal 100 in Abhängigkeit von dem aktuellen Schreibstiftpositionssignal 200 ausgestattet.

Im einzelnen ist ausgehend von den Mitteln 20 zur Bestimmung der aktuellen Schreibstiftposition eine Summationseinrichtung 30 vorgesehen, die eingangsseitig mit dem Schreibstiftpositionssignal 200 und dem Meßsignal 100 beaufschlagt ist und ausgangsseitig eine Regelabweichung 300 als Differenz aus dem Meßsignal 100 und dem Schreibstiftpositionssignal 200 abgibt. Die Regelabweichung 300 ist ein Maß für den Augenblickswert des Fehlers zwischen dem aufzuzeichnenden Meßsignal 100 und dem anhand der aktuellen Schreibstiftposition tatsächlich aufgezeichneten Meßwert, der über das Schreibstiftpositionssignal 200 quantifiziert ist.

Der Summationseinrichtung 30 ist ein Pulsbreitenmodulator 40 nachgeschaltet, der aus einem Rampengenerator 42 und einer Komparatorschaltung 41 mit zwei Eingängen aufgebaut sein kann, wobei an den ersten Eingang der Komparatorschaltung 41 die Regelabweichung 300 aufgeschaltet ist und an den zweiten Eingang der Komparatorschaltung 41 das Ausgangssignal des Rampengenerators 42 angeschlossen ist. Das Ausgangssignal des Rampengenerators 42 ist als Rampensignal 500 bezeichnet. Die Komparatorschaltung 41 weist einen Ausgang auf, der gleichermaßen Ausgang des Pulsbreitenmodulators 40 ist und an dem ein pulsbreitenmoduliertes Regelsignal 400 abgreifbar ist.

Dem Pulsbreitenmodulator 40 sind Mittel 60 zur galvanischen Trennung des pulsbreitenmodulierten Regelsignals 400, das galvanisch mit dem Meßsignal 100, dem Schreibstiftpositionssignal 200 und der Regelabweichung 300 verbunden ist, von den Mitteln zur Steuerung des Antriebsmotors 90 nachgeschaltet.

Dem Mittel 60 zur galvanischen Trennung ist ein Signalumformer 70 nachgeschaltet, der geeignet ist, das pulsbreitenmodulierte Regelsignal in eine der Bauart des Antriebsmotors 90 entsprechende Signalspannung umzuformen. Die galvanisch voneinander getrennten Funktionsblöcke sind in Fig. 1 mit einer strichpunktierten Linie voneinander abgegrenzt. Dem Signalumformer 70 ist ein Verstärker 80 zur leistungsmäßigen Anpassung des Signalumformers 70 an den Antriebsmotor 90 nachgeschaltet. Der Antriebsmotor 90 ist über eine nicht dargestellte Getriebevorrichtung elektrisch isoliert mit den Mitteln zur Aufnahme des Schreibstiftes 10 mechanisch gekoppelt. Der Schreibstift 10 ist mechanisch mit den Mitteln 20 zur Bestimmung der Schreibstiftposition verbunden.

In vorteilhafter Weise kommen die Funktionsblöcke des Positionierregelkreises, die galvanisch mit Meßsignalquellen, die sich physisch in einem explosionsgefährdeten Bereich befinden und durch die Mittel 20 zur Bestimmung der Schreibstiftposition, die Summationseinrichtung 30 und der Pulsbreitenmodulator 40 umfaßt sind, ohne Leistungsbauelemete aus, so daß die einschlägigen Rechtsvorschriften über den Betrieb von elektrischen Einrichtungen in explosionsgefährdeten Bereichen technisch erfüllbar sind.

In Ausgestaltung der Erfindung ist vorgesehen, daß das Mittel 60 zur galvanisch getrennten Übertragung elektrischer Signale ein Optokoppler ist. Vorteilhafterweise sind derartige Optokoppler als konfektionierte Standardbauelemte verfügbar, so daß aufwendige Herstellungsverfahren, wie sie für vergleichbare Trennübertrager erforderlich wären, entfallen. Darüber hinaus reicht das übertragbare Frequenzspektrum eines Optokopplers bis zur Gleichstromübertragung herab. Vorteilhafterweise ist dadurch der Entwurf des Rampengenerators 42 erleichtert, indem eine Schwingungsfrequenz vorgebbar ist, deren spektrale Hochfrequenzanteile gering bleiben, so daß die die elektromagnetische Verträglichkeit beeinflussenden Störabstrahlungen vermeidbar sind.

Weiterhin kann vorgesehen sein, daß der Signalumformer 70 ein Mikrocontroller ist. Derartige Mikrocontroller sind aufgrund ihrer Programmierbarkeit bei gleichbleibender Schaltungsstruktur sowohl an verschiedene Typen von Antriebsmotoren 90 als auch an verschiedene Betriebsmodi der Umformung des empfangenen pulsbreitenmodulierten Regelsignals 400 anpaßbar. Vorteilhafterweise wird dadurch die Inbetriebnahme der Registriereinrichtung erleichtert.

In weiterer Ausgestaltung der Erfindung kann vorgesehen sein, den Rampengenerator 42 als Sägezahnsignalgenerator auszuführen. Derartige Sägezahnsignalgeneratoren zeichnen sich vorteilhafterweise durch einen sehr einfachen Aufbau aus.

In einer anderen Ausführungsform kann vorgesehen sein, den Rampengenerator 42 als Dreieckssignalgenerator auszuführen. Vorteilhafterweise weist das Ausgangssignal eines Dreiecksgenerator ein Frequenzspektrum mit monoton fallenden Amplituden für steigende Frequenzen auf. Diese Eigenschaft ist insbesondere dann von Vorteil, wenn hohe Anforderungen an die elektromagnetische Verträglichkeit der Registriereinrichtung bestehen.

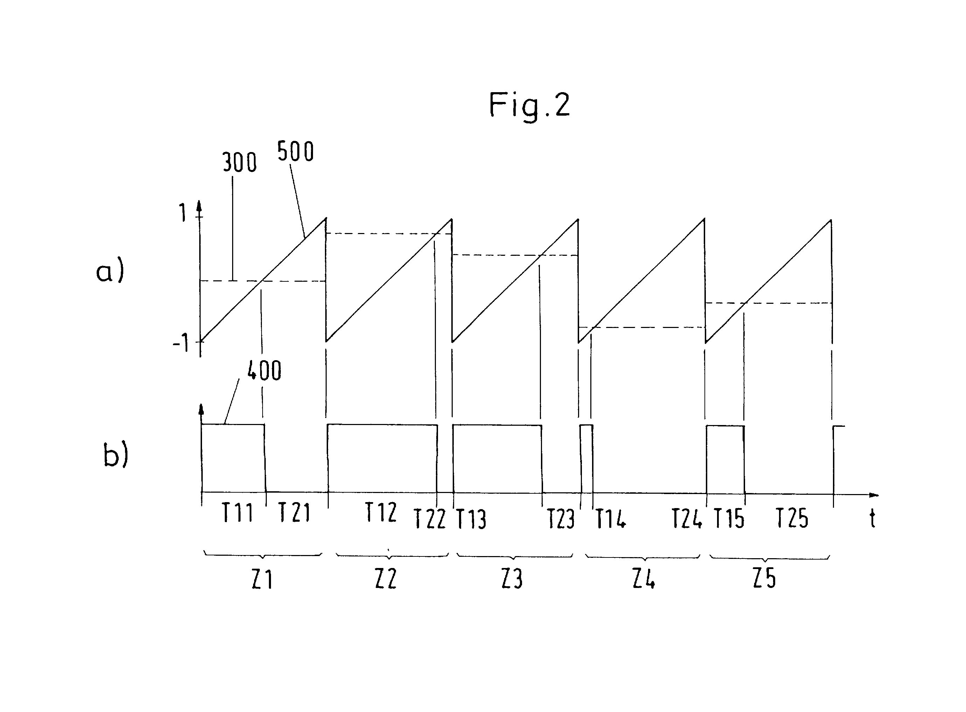

Am Ausgang des Pulsbreitenmodulators 40 ist ein pulsbreitenmoduliertes Regelsignal 400 abgreifbar, dessen Periode gemäß Figur 2 aus einer Pulsdauer T11 bis T15 und einer Pulspausedauer T21 bis T25 besteht. In Figur 2 sind Zeitverlaufsdiagramme für ausgewählte Signalverläufe dargestellt. In Figur 2a ist ein normiertes Rampensignal 500 als Sägezahnsignal zwischen den Grenzwerten "-1" und "1" dargestellt. Weiterhin sind in Figur 2a verschiedene Zustände Z1 bis Z5 der Regelabweichung 300 als gestrichelte Linie zwischen den Grenzwerten "-1" und "1" normiert dargestellt. In Figur 2b ist das pulsbreitenmodulierte Regelsignal 400 während der Zustände Z1 bis Z5 korrespondierend zu der Regelabweichung 300 dargestellt.

Während des Zustandes Z1 ist die Regelabweichung 300 gleich Null. Die Pulsdauer T11 des pulsbreitenmodulierten Regelsignals 400 und die Pulspausedauer T21 umfassen im Zustand Z1 die gleiche Zeitdauer. Der Wert der Regelabweichung 300 ist Null, das bedeutet, daß die Schreibstiftposition eine exakte Abbildung des augenblicklichen Meßsignals 100 ist. Eine Korrektur der Schreibstiftposition ist somit nicht erforderlich.

Während des Zustandes Z2 ist durch eine sprunghafte Änderung des Meßsignals 100 die Regelabweichung 300 stark positiv, infolgedessen ist die Pulsdauer T12 viel länger als die Pulspausedauer T22 des pulsbreitenmodulierten Regelsignals 400 im Zustand Z2. Der große Betrag der Zeitdifferenz zwischen der Pulsdauer T12 und der Pulspausedauer T22 bewirkt eine hohe Verfahrgeschwindigkeit des Schreibstiftes 10 in einer ersten Bewegungsrichtung quer zur Transportrichtung des Aufzeichnungsträgers.

Mit fortschreitender Nachführung des Schreibstiftes vermindert sich der Betrag der Differenz zwischen dem Schreibstiftpositionssignal 200 und dem Meßsignal 100, so daß die Regelabweichung 300, wie im Zustand Z3 dargestellt, sich dem Wert Null annähert. Dabei ist weiterhin die Pulsdauer T13 größer als die Pulspausedauer T23, jedoch ist der Betrag der Differenz aus der Pulsdauer T13 und der Pulspausedauer T23 im Zustand Z3 kleiner als die Differenz aus der Pulsdauer T12 und der Pulspausedauer T22 im Zustand Z2. Mit zunehmender Verringerung des Betrages der Differenz aus Pulsdauer T13 und Pulspausedauer T23 verringert sich die Verfahrgeschwindigkeit des Schreibstiftes 10 quer zur Transportrichtung des Aufzeichnungsträgers bis zum Erreichen des Zustandes Z1.

Im Zustand Z4 ist eine sprunghafte Veränderung der Regelabweichung 300 in den negativen Bereich dargestellt, der zur Folge hat, daß die Pulsdauer T14 viel kleiner ist als die Pulspausedauer T24. Der Betrag der Differenz aus Pulsdauer T14 und Pulspausedauer T24 ist vergleichsweise groß und bewirkt damit eine hohe Verfahrgeschwindigkeit des Schreibstiftes 10 quer zur Transportrichtung des Aufzeichnungsträgers und wegen dem negativen Vorzeichen der Differenz aus Pulsdauer T14 und Pulspausedauer T24 in einer zweiten zur ersten entgegengesetzten Bewegungsrichtung.

Mit zunehmender Annäherung des Schreibstiftpositionssignals 200 an das augenblickliche Meßsignal 100 nähert sich die Regelabweichung 300 dem Wert Null, so daß, wie im Zustand Z5 dargestellt, die Pulsdauer T15 wächst und sich die Pulspausedauer T25 verkürzt bis der Zustand Z1 erreicht ist. Der Betrag der Differenz aus der Pulsdauer T15 und der Pulspausedauer T25 ist vergleichsweise gering, so daß der Schreibstift 10 mit geringer Verfahrgeschwindigkeit bewegt wird. Darüber hinaus ist die Differenz aus der Pulsdauer T15 und der Pulspausedauer T25 negativ, so daß der Schreibstift 10 in der zweiten Bewegungsrichtung verfahren wird.

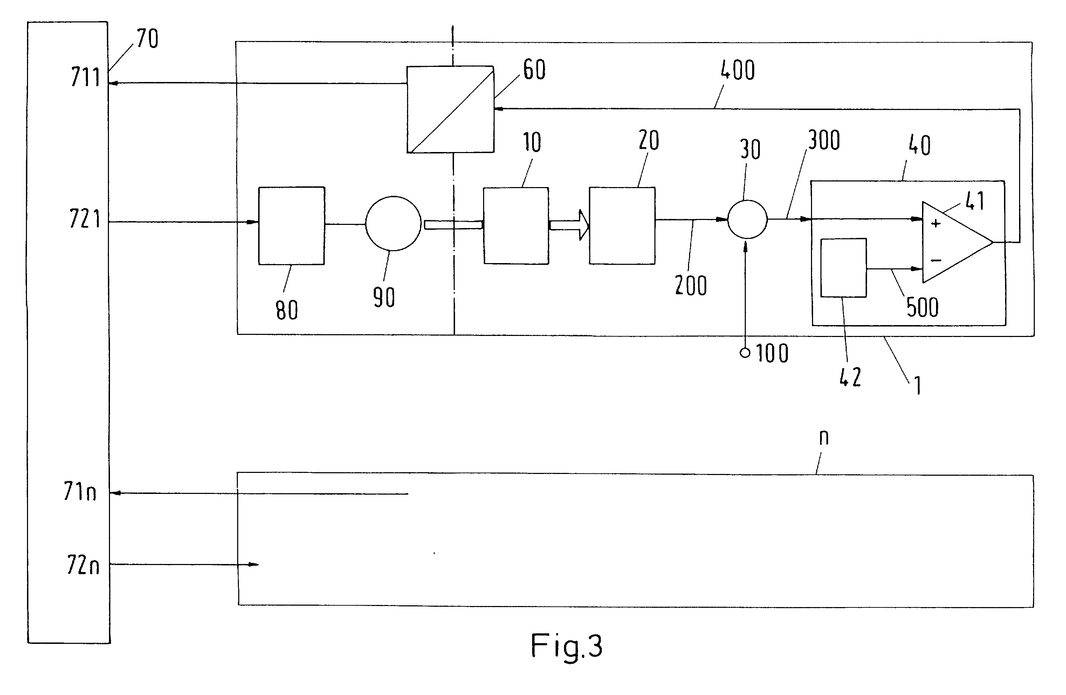

In weiterer Ausgestaltung der Erfindung kann vorgesehen sein, in einer mehrkanaligen Registriereinrichtung den als Mikrocontroller ausgeführten Signalumformer 70 gemäß Figur 3 unter Verwendung gleicher Bezugszeichen wie in Figur 1 für gleiche Mittel als gemeinsamen Signalumformer 70 für eine Mehrzahl von Registrierkanälen 1 bis n vorzusehen. Für n Registrierkanäle 1 bis n weist der Signalumformer 70 genau n Eingänge 711 bis 71n und n Ausgänge 721 bis 72n auf, die paarweise jeweils einem der Registrierkanäle 1 bis n zugeordnet sind.

Der besondere Vorteil dieser Positionieranordnung ist darin zu sehen, daß mit sehr einfachen Mitteln eine hohe Positioniergenauigkeit erreicht wird.

Die hohe Positioniergenauigkeit wird insbesondere dadurch erreicht, daß der Fangbereich des Pulsbreitenmodulators 40 so auslegbar ist, daß einerseits bereits ihrem Betrage nach kleine absolute von Null verschiedene Regelabweichungen 300 eine große Veränderung des Tastverhältnisses des pulsbreitenmodulierten Regelsignals 400 bewirkt, was einer hohen inneren Verstärkung entspricht und damit einer präzisen Positionierbarkeit des Schreibstiftes 10 entsprechend dem Meßsignal 100, und andererseits Grenzen des Fangbereiches so dimensionierbar sind, daß das Erreichen eines Grenzwertes die maximale Verfahrgeschwindigkeit des Schreibstiftes 10 bewirkt. Dabei wird unter Fangbereich des Pulsbreitenmodulators 40 der Wertebereich der Regelabweichung 300 verstanden, der in ein proportionales Tastverhältnis übertragbar ist. Überschreitet die Regelabweichung 300 die obere Grenze des Fangbereiches, hat das pulsbreitenmodulierte Regelsignal 400 dauerhaft den logischen Zustand EINS, wobei der Schreibstift 10 mit maximaler Verfahrgeschwindigkeit in seiner ersten Bewegungsrichtung verfahren sind, bis die Regelabweichung 300 die obere Grenze des Fangbereiches unterschreitet. Unterschreitet die Regelabweichung 300 die untere Grenze des Fangbereiches, hat das pulsbreitenmodulierte Regelsignal 400 dauerhaft den logischen Zustand NULL, wobei der Schreibstift 10 mit maximaler Verfahrgeschwindigkeit in seiner zweiten Bewegungsrichtung verfahren wird, bis die Regelabweichung 300 die untere Grenze des Fangbereiches überschreitet. Der Fangbereich des Pulsbreitenmodulators 40 ist in Figur 2 normiert durch die Grenzwerte "1" und "-1" der Amplitudenskala dargestellt.

Vorteilhafterweise ist ein als Optokoppler ausgeführtes Mittel 60 zur galvanischen Trennung gerade in einfachster Bauart geeignet, Dauerstrichsignale, wie sie beim Verlassen des Fangbereiches durch die Regelabweichung 300 durch den Pulsbreitenmodulator 40 ausgegeben wird, zu übertragen. Auf diese Weise ist mit einfachsten Mitteln eine hohe angestrebte Positioniergenauigkeit des Schreibstiftes 10 entsprechend dem Meßsignal 100 ermöglicht.

## Patentansprüche

1. Anordnung zum Positionieren eines Schreibstiftes (10) in einer Registriereinrichtung zum Aufzeichnen des Zeitverlaufes mindestens eines anschaltbaren Meßsignals (100), die mindestens
- Mittel zum Transport eines Aufzeichnungsträgers,
- ein Schreibsystem bestehend aus einem elektrischen Antriebsmotor (90), einer Getriebevorrichtung zum Umsetzen der rotatorischen Antriebsbewegung des Antriebsmotors (90) in eine translatorische Bewegung quer zur Transportrichtung des Aufzeichnungsträgers und Mittel zur Aufnahme des Schreibstiftes (10), die der translatorischen Bewegung des Abtriebs der Getriebevorrichtung folgend angeordnet sind,
- Mittel (20) zur Bestimmung der aktuellen Schreibstiftposition mit Ausgabe eines der Schreibstiftposition adäquaten elektrischen Schreibstiftpositionssignals (200) und
- Mittel zur Steuerung des Antriebsmotors (90) entsprechend dem Meßsignal (100) in Abhängigkeit von dem aktuellen Schreibstiftpositionssignal (200) mit Mitteln zur Bestimmung der Regelabweichung (300) als Differenz aus dem Meßsignal (100) und einem Schreibstiftpositionssignal (200) aufweist,
- wobei das Schreibsystem mit einem Optokoppler (60) und einem elektrisch isolierenden Getriebeteil galvanisch von den Mitteln zur Bestimmung der aktuellen Schreibstiftposition und den Mitteln zur Bestimmung der Regelabweichung (300) als Differenz aus dem Meßsignal (100) und einem Schreibstiftpositionssignal (200) getrennt ist,
**dadurch gekennzeichnet**,
daß die Mittel zur Steuerung des Antriebsmotors (90) ausgehend von den Mitteln (20) zur Bestimmung der aktuellen Schreibstiftposition durch einen Regelkreis bestehend aus der Kettenschaltung folgender Elemente in der angegebenen Reihenfolge gebildet sind
a) eine Summationseinrichtung (30) zur Bestimmung der Regelabweichung (300) als Differenz aus dem Meßsignal (100) und einem Schreibstiftpositionssignal (200),
b) ein Pulsbreitenmodulator (40),
c) der Optokoppler (60) zur galvanisch getrennten Übertragung elektrischer Signale,
d) ein Signalumformer (70),
e) ein Verstärker (80) und
f) der Antriebsmotor (90), der über die Getriebevorrichtung elektrisch isoliert mit den Mitteln zur Aufnahme des Schreibstiftes (10) mechanisch gekoppelt ist.

2. Anordnung nach Anspruch 1
**dadurch gekennzeichnet**,
daß der Pulsbreitenmodulator (40) aus einem Rampengenerators (42) und einer Komparatorschaltung (41) mit zwei Eingängen, wobei an den ersten Eingang die Regelabweichung (300) und an den zweiten Eingang das Ausgangssignal eines Rampengenerators (42) angeschlossen ist, besteht.

3. Anordnung nach Anspruch 1
**dadurch gekennzeichnet**,
daß der Signalumformer (70) ein Mikrocontroller ist.

4. Anordnung nach Anspruch 1
**dadurch gekennzeichnet**,
daß der Rampengenerator (42) ein Sägezahnsignalgenerator ist.

5. Anordnung nach Anspruch 1
**dadurch gekennzeichnet**,
daß der Rampengenerator (42) ein Dreiecksignalgenerator ist.

6. Anordnung nach einem der Ansprüche 1 bis 5
**dadurch gekennzeichnet**,
daß am Ausgang der Komparatorschaltung (41) ein pulsbreitenmoduliertes Regelsignal (400) abgreifbar ist, dessen Periode aus einer Pulsdauer (T11 bis T15) und einer Pulspausedauer (T21 bis T25) besteht.

7. Anordnung nach Anspruch 6
**dadurch gekennzeichnet,**
daß die Differenz aus der der Pulsdauer (T11 bis T15) und der Pulspausedauer (T21 bis T25) ein Maß für die Verfahrgeschwindigkeit und die Verfahrrichtung des Schreibstiftes (10) ist.

8. Anordnung nach einem der Ansprüche 1 und 2
**dadurch gekennzeichnet,**
daß der Fangbereich des Pulsbreitenmodulators (40) so auslegbar ist, daß bereits ihrem Betrage nach kleine absolute, von Null verschiedene Regelabweichungen (300) eine große Veränderung des Tastverhältnisses des pulsbreitenmodulierten Regelsignals (400) bewirken.

## Claims

1. Arrangement for positioning a stylus (10) in a logging device for recording the waveform over time of at least one connectible test signal (100) which comprises at least
- means for transporting a recording medium,
- a write-system consisting of an electric drive motor (90), a drive mechanism for converting the rotary drive motion of the drive motor (90) into a translatory motion perpendicular to the direction in which the recording medium is being transported and means for receiving the stylus (10) which are arranged subsequently of the translatory motion at the output of the drive mechanism,
- means (20) for determining the current position of the stylus and for providing an electric stylus-position signal (200) appropriate to the position of the stylus and
- means for controlling the drive motor (90) in correspondence with the test signal (100) in dependence on the current stylus-position signal (200) including means for determining the offset (300) in the form of the difference between the test signal (100) and a stylus-position signal (200),
- wherein the write-system is isolated galvanically from the means for determining the current position of the stylus and the means for determining the offset (300) in the form of the difference between the test signal (100) and a stylus-position signal (200) by an opto-coupler (60) and an electrically insulating drive member,
characterised in that,
the means for controlling the drive motor (90) are formed, starting from the means (20) for determining the current position of the stylus, by a control loop consisting of a chain circuit incorporating the following elements in the sequence indicated
a) a summing device (30) for determining the offset (300) in the form of the difference between the test signal (100) and a stylus-position signal (200),
b) a pulse-width modulator (40),
c) the opto-coupler (60) for the galvanically isolated transmission of electrical signals,
d) a signal converter (70),
e) an amplifier (80) and
f) the drive motor (90) which is mechanically coupled in electrically insulated manner via the drive mechanism to the means for receiving the stylus (10).

2. Arrangement in accordance with Claim 1,
characterised in that
the pulse-width modulator (40) consists of a ramp generator (42) and a comparator circuit (41) having two inputs wherein the offset signal (300) is connected to the first input and the output signal of a ramp generator (42) is connected to the second input.

3. Arrangement in accordance with Claim 1,
characterised in that
the signal converter (70) is a microcontroller.

4. Arrangement in accordance with Claim 1,
characterised in that
the ramp generator (42) is a sawtooth signal generator.

5. Arrangement in accordance Claim 1,
characterised in that
the ramp generator (42) is a triangular waveform signal generator.

6. Arrangement in accordance with any of the Claims 1 to 5, characterised in that
a pulse-width modulated control signal (400) having a period consisting of a pulse interval (T11 to T15) and a pulse-pause interval (T21 to T25) is derivable from the output of the comparator circuit (41).

7. Arrangement in accordance with Claim 6,
characterised in that
the difference between the pulse interval (T11 to T15) and the pulse-pause interval (T21 to T25) provides a measure for the speed of conveyance and the direction of conveyance of the stylus (10).

8. Arrangement in accordance with either of Claims 1 and 2,
characterised in that
the capture range of the pulse-width modulator (40) is arrangable such that even offsets (300) differing by only small amounts in absolute terms from zero result in a a large alteration in the duty ratio of the pulse-width modulated control signal (400).

## Revendications

1. Dispositif pour positionner un stylet (10) dans un appareil d'enregistrement pour enregistrer le profil au cours du temps d'au moins un signal de mesure commutable (100), qui présente au moins :
- des moyens pour transporter un support d'enregistrement,
- un système d'écriture constitué d'un moteur d'entraînement électrique (90), d'un dispositif de transmission pour transformer le mouvement d'entraînement rotatif du moteur d'entraînement (90) en un mouvement de translation transversalement à la direction de transport du support d'enregistrement, et des moyens pour recevoir le stylet (10), qui sont agencés en suivant le mouvement de translation de la sortie du dispositif de transmission,
- des moyens (20) pour déterminer la position actuelle du stylet avec émission d'un signal électrique de position du stylet (200), correspondant à la position du stylet, et
- des moyens pour commander le moteur d'entraînement (90) de facon correspondant au signal de mesure (100) de facon dépendant du signal de position actuel du stylet (200), avec des moyens pour déterminer l'écart de réglage (300) comme différence du signal de mesure (100) et d'un signal de position du stylet (200),
- le système d'écriture étant séparé par un coupleur optique (60) et une partie de transmission électriquement isolante, de facon galvanique, des moyens pour déterminer la position actuelle du stylet et des moyens pour déterminer l'écart de réglage (300) comme différence du signal de mesure (100) et d'un signal de position du stylet (200),
caractérisé en ce que les moyens pour commander le moteur d'entraînement (90) sont formés à partir des moyens (20) pour déterminer la position actuelle du stylet par un circuit de réglage constitué d'éléments suivant le circuit itératif dans la succession indiquée :
a) un dispositif de sommation (30) pour déterminer l'écart de réglage (300) comme différence du signal de mesure (100) et d'un signal de position du stylet (200),
b) un modulateur de largeur d'impulsion (40),
c) le coupleur optique (60) pour le transfert galvaniquement séparé de signaux électriques,
d) un transformateur de signaux (70),
e) un amplificateur (80), et
f) le moteur d'entraînement (90) qui est mécaniquement couplé aux moyens pour recevoir le stylet (10) de facon électriquement isolée par l'intermédiaire du dispositif de transmission.

2. Dispositif selon la revendication 1,
caractérisé en ce que le modulateur de largeur d'impulsion (40) est constitué d'un générateur de rampe (42) et d'un circuit comparateur (41) à deux entrées, l'écart de réglage (300) étant raccordé à la première entrée et le signal de sortie d'un générateur de rampe (42) étant raccordé à la seconde entrée.

3. Dispositif selon la revendication 1,
caractérisé en ce que le transformateur de signaux (70) est un microcontrôleur.

4. Dispositif selon la revendication 1,
caractérisé en ce que le générateur de rampe (42) est un générateur de signaux en dents de scie.

5. Dispositif selon la revendication 1,
caractérisé en ce que le générateur de rampe (42) est un générateur de signaux triangulaires.

6. Dispositif selon une des revendications 1 à 5,
caractérisé en ce que, à la sortie du circuit comparateur (41), un signal de réglage (400) dont la largeur d'impulsion est modulée peut être prélevé, dont la période est constituée d'une durée d'impulsion (T11 à T15) et d'une durée de pause d'impulsion (T21 à T25).

7. Dispositif selon la revendication 6,
caractérisé en ce que la différence de la durée d'impulsion (T11 à T15) et de la durée de pause d'impulsion (T21 à T25) constitue une mesure de la vitesse de déplacement et de la direction de déplacement du stylet (10).

8. Dispositif selon une des revendications 1 et 2,
caractérisé en ce que la zone collectrice du modulateur de largeur d'impulsion (40) est telle que, déjà par module, de petits écarts de réglage absolus (300), différents de zéro, entraînent une modification importante du taux d'impulsion du signal de mesure (400) dont la largeur d'impulsion est modulée.
